# EUROPEAN PATENT APPLICATION

(11) **EP 4 711 219 A1**
(43) Date of publication of application: **18.03.2026**
(21) Application number: 24199890.5
(22) Date of filing: 12.09.2024
(51) Int. Cl.: B60T 13/66, B60T 17/22

(54) **REDUNDANT BRAKE ACTUATOR CONTROL AND SUPPLY INTERFACE USING ONE INPUT VOLTAGE LEVEL**

(71) Applicant: KB Intellectual Property GmbH & Co. KG, 82049 Pullach (DE)
(72) Inventor: SZABO, Gergely, 1125 Budapest (HU); URBAN, Matyas, 2638 Kemence (HU); KOKREHEL, Csaba, 1119 Budapest (HU); TOTH-KATONA, Tamas, 1039 Budapest (HU); HÖS, Levente, 1047 Budapest (HU); SZABO, Janos, 1101 Budapest (HU); LÖRINCZI, Ottó Botond, 1038 Budapest (HU); LINDNER, Peter, 2300 Ráckeve (HU); NEMETH, Huba, 1116 Budapest (HU)

(57) **Abstract**

An electronic control unit (ECU) for an actuator of an electro-mechanical brake for a commercial or transport vehicle comprises two electrical supply interfaces which comprise a main supply interface which operates on a first voltage level U1, wherein the main supply interface is in electrical communication with a main supply line (MSL, 10), wherein the main supply line (MSL, 10) is configured to operate the brake actuator. The two electrical supply interfaces further comprise a secondary supply interface which operates on the first voltage level U1, wherein the secondary supply interface is in electrical communication with a secondary supply line (SSL). The main supply interface and supply line (MSL) have a first power capability P1, and the secondary supply interface and supply line (SSL) have a second power capability P2, wherein the sum of the two power capabilities P1, P2 is equal to or higher than the maximum power demand P0 required by the brake actuator. A power switch (PS1) connects the main supply line (MSL) with the secondary supply line (SSL) to ensure a power demand Pm required by the electric motor driving the brake actuator, wherein the power demand Pm is split between the main supply line (MSL) and the secondary supply line (SSL). The ECU further comprises two data communication interfaces which respectively are in data communication with two communication lines (CL1, CL2) which are configured to operate a CAN communication between the brake actuator and the vehicle. The two communication lines (CL1, CL2) are respectively connected to two CAN RX/TX circuits (CC1, CC2).

## Description

The invention relates to an electric/electronic control unit (ECU) for an actuator of an electro-mechanical brake for a commercial or transport vehicle.

Brake-by-wire systems of transport vehicles or commercial vehicles comprise a new field of innovations. Brake-by-wire technology in the automotive industry is the ability to control brakes through electronic means, without a mechanical connection that transfers force to the physical braking system from a driver input apparatus. Electro-mechanical brakes are a specific type of a brake-by-wire system.

An electro-mechanical braking system is a type of braking system that uses electrical and mechanical components to slow or stop a vehicle. It does this by using an electric motor or actuator, instead of pneumatic or hydraulic pressure as in traditional braking systems, to apply the brakes. The electric motor receives braking commands from an electronic brake pedal control unit (ECU) by driver input or from other systems such as a central computer.

Since brake-by-wire systems typically have no mechanical linkages (i.e. particularly no pneumatic or hydraulic connections) that would provide a manual control over the brakes, they require a fail-operational redundancy, including e.g. redundant power supplies, sensors, and communication networks.

To this end, the new system architectures require a special hardware infrastructure. Until present day, commercial vehicle systems require compressed air and air treatment systems for the pneumatic brakes. However, in the future, the brake systems will be electrical, because of the legal environment and requirements, a better controllability, and a better efficiency. With using an electro-mechanical brake system, the compressor and the other air treatment and control equipment can be smaller and more efficient.

This technical situation encompasses the problem that commercial vehicles nowadays use electro-pneumatic or by-wire brake systems where the electronic part of the control is realised as a single circuit control. In case of malfunction of the control electronics, the driver can control the pneumatic part of the brake system by his/her foot because a two-circuit pneumatic backup system is still available.

In case of purely electric brake-by-wire systems, if the control and the electric power input have a failure, the brake system will not be able to give the required brake performance to stop or slow down the vehicle. So, in these cases, the concerned interfaces should be present redundantly to prevent the loss or non-operability of the brake system.

Since typically no pneumatic system is implemented into the braking system and the brake-by-wire system uses different voltage levels, the number of electrical connectors can be too big, for example because of or in view of the limited installation space.

Furthermore, the communication between the brake actuator and the vehicle should be redundant as well, because a communication loss can for example affect the stability of the vehicle. Here, for example, non-available or wrong wheel speed signals can cause a wrong ABS and ESP functionality.

Publication DE 102008009043 B3 shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

Publication EP 3626559 A1 is about a redundant electro-pneumatic brake system, where the axle pressure modulators are equipped with redundant digital communication line towards a secondary brake control ECU. Moreover, these axle modulators do have redundant electric supply. This solution enables to control the redundant circuit electrically, so pneumatics can be eliminated from the cabin, and the redundant brake system can provide full ESP functionality as well.

Publication EP 2794368 A1 shows a redundant brake system for a commercial vehicle. The system utilizes the parking brake integrated into an air supply unit as a redundant brake actuator. For axles not equipped with spring parking brake chambers the air supply unit includes an additional electro-pneumatic modulator to generate control pressure for the pneumatic control input of the axle modulators.

Publication EP 2229302 A1 shows a redundant brake system for a commercial vehicle. The system utilizes pneumatic brake system as primary and an electro-mechanical system as redundant brake system. All axles are equipped with both types of brake actuators.

Publication EP 3938255 A1 describes a redundant brake system, where the electronic parking brake can drive the front axle modulator's backup port by using an inverting relay valve. Moreover, using a select high valve at the backup port, either the inverting relay, or the brake pedal's pneumatic backup circuit can control the backup port of the front axle modulator, so there is still pneumatics in the cabin.

Publication EP 3749558 A1 claims an electro-pneumatic redundant brake system, which uses wheel modulators having redundant pneumatic supply. To ensure circuit separation, another service brake circuit is introduced separated by a protection valve, and this circuit can act as redundant pneumatic supply for the electro-pneumatic wheel modules.

Publication EP 4116161 A1 is about a redundant brake system, which utilizes the electronic parking brake system as redundant brake system. The EPB module - which can be integrated into the air treatment unit - consists of a valve arrangement having two inverting and two non-inverting outputs to control the front and rear service brake modulator's backup ports, the front and rear parking brake actuators, and the trailer control module independently as well to implement a redundant electro-pneumatic brake system. The EPB module (and the primary brake control ECU) can receive brake demands directly from the foot brake module or from both autonomous driving ECUs.

Publication EP 3452346 A1 describes a redundant brake system, where the electronic parking brake can drive the rear axle parking brake chambers as a redundant brake circuit. Moreover, using a pneumatic booster valve the backup port of the front axle modulator can be controlled. By adding a bypass valve to this line either the foot brake module's pneumatic outlet port or the pneumatic outlet port of the booster can be connected to the backup port of the front axle modulator. But still, in this way pneumatics is still present in the cabin.

Publication EP 3600992 A1 describes a redundant brake system, where the electronic parking brake can drive the front axle modulator's backup port by using the trailer control module's pneumatic control outlet (yellow line). Moreover, using a select high valve at the backup port, either the inverting relay, or the brake pedal's pneumatic backup circuit can control the backup port of the front axle modulator, so there is still pneumatics in the cabin.

Publication EP 3600994 A1 describes a redundant brake system, where the electronic parking brake is integrated into the trailer control module to implement the redundant electro-pneumatic brake system for a CV.

Publication EP 4001031 A1 describes a brake system, where the electronic parking brake as a redundant brake system is equipped with dedicated yaw-rate, acceleration, and wheel-speed sensors to provide full ESP functionality by the redundant system as well. The parking brake module can control the front and rear spring brake actuators independently.

Publication EP 3787943 A1 claims a redundant electro pneumatic brake system, where all brake actuators are controlled by a wheel pressure modulator having redundant pneumatic supply. Therefore, a third independent service brake pneumatic circuit must be introduced to ensure circuit separation. All the wheel pressure modulators can receive brake demands from both autonomous driving ECUs.

It is an object of the present invention to overcome the above discussed problems that are present in the prior art and to provide a respectively improved brake system and particularly an improved electric/electronic control unit (ECU) for an actuator of an electro-mechanical brake system for a commercial or transport vehicle having suitable redundancy to reliably control the brake system of the vehicle.

According to the present invention, this aim is achieved by an electronic control unit (ECU) for an actuator of an electro-mechanical brake for a commercial or transport vehicle as defined by claim 1. Advantageous embodiments of the invention are defined by the dependent claims 2 to 14.

Accordingly, an electronic control unit (ECU) for an actuator of an electro-mechanical brake for a commercial or transport vehicle comprises two electrical supply interfaces, wherein the two electrical supply interfaces comprise a main supply interface which operates on a first voltage level U1, wherein the main supply interface is in electrical communication with a main supply line, wherein the main supply line is configured to operate the brake actuator, and wherein the two electrical supply interfaces further comprise a secondary supply interface which operates on the first voltage level U1, wherein the secondary supply interface is in electrical communication with a secondary supply line.

The electronic control unit of the invention is further configured such that the main supply interface and the main supply line have a first power capability P1, and the secondary supply interface and the secondary supply line have a second power capability P2, wherein the sum of the two power capabilities P1, P2 is equal to or higher than the maximum power demand P0 required by the brake actuator.

Herein, the electronic control unit preferably comprises a power switch which connects the main supply line and the secondary supply line with each other to ensure a power demand Pm required by the electric motor which is driving the brake actuator, wherein the power demand Pm can be split between the main supply line and the secondary supply line.

According to the invention, the electronic control unit further comprises two data communication interfaces, wherein the two data communication interfaces respectively are in data communication with two communication lines, wherein the two communication lines are configured to operate a CAN communication between the brake actuator and the vehicle. Herein, the two communication lines are respectively connected to two CAN RX/TX circuits.

Thus, according to the invention, the electronic control unit for an actuator of an electro-mechanical brake comprises two electrical supply interfaces and two communication interfaces. The two electrical supply interfaces encompass a main supply interface and a secondary supply interface which use a first voltage U1. The main supply interface, and thus the main supply line connected thereto, has a first power capability P1. The secondary supply interface, and thus the secondary supply line connected thereto, has a second power capability P2. The main and secondary supply lines can have the same or different power capabilities, but the sum of the power capabilities P1, P2 shall be at least equal to or bigger than a power demand P0, which is the maximum required power of the brake actuator.

Furthermore, according to the invention, the electronic control unit for an actuator of an electro-mechanical brake comprises two communication interfaces to which respectively two communication lines are connected which are provided to maintain a redundant CAN communication between the brake actuator and the vehicle.

With this architecture according to the invention, the electrical supply interfaces and the communication interfaces for the actuator are provided redundantly. The power demand of the brake actuator can thus for example be covered with smaller connectors. The actuator will not lose too much of the performance if the main or secondary supply lines have a failure. Furthermore, the high power demand of the brake actuator can be split into two parts. Thus, for example, smaller cable cross sections can be used.

According to a further embodiment of the invention, the electronic control unit is configured such that the main supply line comprises a main supply line portion external to the electronic control unit, the electronic control unit comprises a first energy transition line which operates on the first voltage level U1, and the electronic control unit comprises a first input switch, wherein the first input switch is configured to separate the external main supply line portion from the electronic control unit and the first energy transition line.

The electronic control unit is further configured such that the secondary supply line comprises a secondary supply line portion external to the electronic control unit, and the electronic control unit comprises a second input switch, wherein the second input switch is configured to separate the external secondary supply line portion from the electronic control unit and the first energy transition line.

The electronic control unit of the invention can further comprise one or more of the following: a microcontroller unit (MCU), an inverter, one or more sensors, and a parking brake driver.

According to a further embodiment of the invention, the electronic control unit is configured such that it comprises a first auxiliary power supply and a second auxiliary power supply, wherein the first and second auxiliary power supplies are configured to generate a second voltage U2 and/or a third voltage U3 for the MCU and/or the sensors and/or the CAN RX/TX circuits and/or the parking brake driver. The electronic control unit further comprises a second energy transition line for the second voltage level U2 and a third energy transition line for the third voltage level U3.

In a further embodiment of the invention, the electronic control unit comprises a separator switch which is configured to switch and separate the U3 voltage lines of the first and second auxiliary power supplies. The electronic control unit may be configured such that, if the first and second auxiliary power supplies are available, the MCU is configured to choose which one of the first and second auxiliary power supplies will generate the U2 and U3 voltages, and/or, if one of the first and second auxiliary power supplies has a failure, the MCU is configured to disable the affected auxiliary power supply and to decouple the U3 voltage line with the separator switch from the affected auxiliary power supply.

Besides, the invention also provides an electro-mechanical brake for a commercial or transport vehicle, wherein the brake comprises an electronic control unit according to the invention.

Further details and advantages of the invention will be explained in the following detailed description of an embodiment of the invention in combination with the attached drawing.

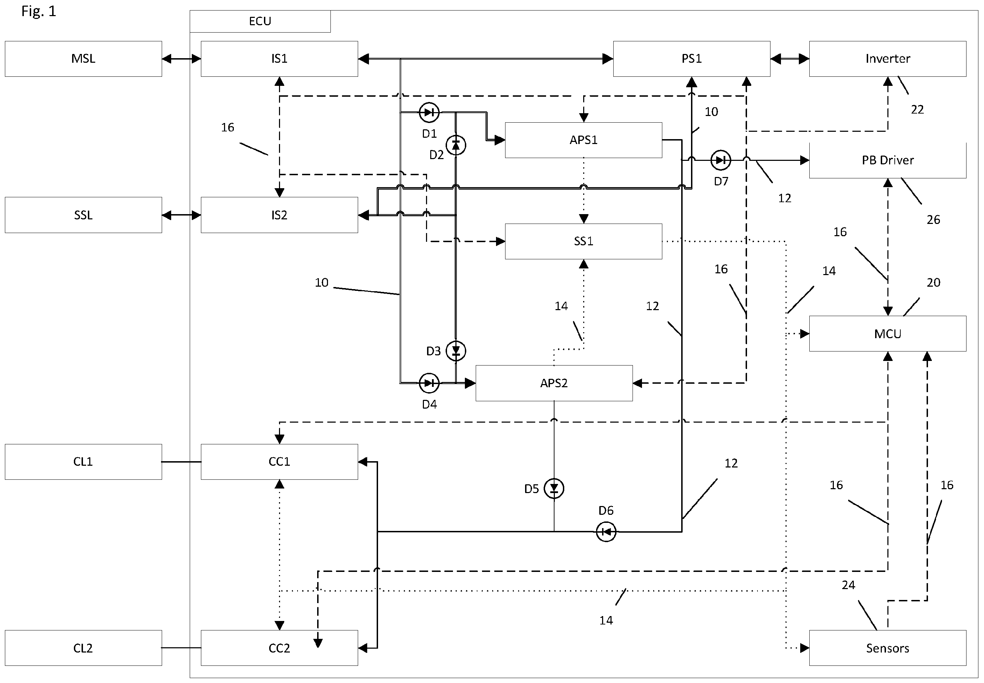

Fig. 1 shows an electric/electronic control unit (ECU) for an actuator of an electro-mechanical brake for a commercial or transport vehicle according to the invention.

Fig. 1 shows an electric/electronic control unit (ECU) for an actuator of an electro-mechanical brake. This ECU has two electrical supply interfaces and two data/communication interfaces, as is explained in the following.

Herein, the two electrical supply interfaces comprise a main supply interface which connects an external main supply line MSL to the ECU which comprises an internal main supply line or first energy transition line 10 (bold/double black line in Fig. 1). The main supply interface uses a first voltage U1, i.e. operates on a first voltage level U1. Accordingly, the main supply line MSL and the first energy transition line 10 have the voltage level U1. The main supply line MSL and the first energy transition line 10 are in electrical communication with the brake actuator and are responsible for the operation and performance of the brake actuator. The external main supply line MSL can be separated from the ECU and thus from the first energy transition line 10 with a first input switch IS1.

The other of the two electrical supply interfaces is a secondary supply interface which connects an external secondary supply line SSL to the ECU and therein particularly to the first energy transition line 10. The secondary supply interface also uses the first voltage U1, i.e. operates on the first voltage level U1. Accordingly, the secondary supply line SSL has the voltage level U1. The external secondary supply line SSL can be separated from the ECU and thus from the first energy transition line 10 with a second input switch IS2.

The secondary supply line SSL can also operate the brake actuator if it is needed. For example, if the fuses on a concerned commercial vehicle (truck) are not enough to supply the brake actuator only on the main supply line MSL, in this case, the secondary supply line SSL will provide the remaining needed power.

The main supply interface and the secondary supply interface have a first power capability P1 and a second power capability P2. Therein, the main supply line MSL has a first power capability P1, and the secondary supply line SSL has a second power capability P2. Therein, further, the main supply line MSL and the secondary supply line SSL can have the same power capability or a different power capability. However, the sum of the two power capabilities P1, P2 shall be at least equal to or higher than a power demand P0, wherein P0 is the maximum required power of the brake actuator. Herein, the power capability means the maximum electric power that the power line/switch can handle.

The main supply line MSL and the secondary supply line SSL are connected to each other via a power switch PS1 to ensure the motor power demand Pm, i.e. a power required by the electric motor which is driving the brake actuator. The power switch PS1 is a power and safety switch between an inverter 22 and the main supply line MSL and the secondary supply line SSL. This is needed because the exact voltages of the supply lines typically can be different in practice. The power switch PS1 is provided to solve this issue.

The power demand can be split between the main supply line MSL and the secondary supply line SSL. This depends on the available power on the U1 voltage level connection, the installation space, etc. For example, a big enough connector can be used that is capable to handle the P0 power demand because of the installation space. In this case, the P0 power demand shall be split between the main supply line MSL and the secondary supply line SSL.

The power switch PS1 is responsible for controlling the current flow between an inverter 22, which is contained in the ECU, and the main supply line MSL and the secondary supply line SSL. The power switch PS1 contains over-voltage and under-voltage protection functions and over-current protection as well as over-temperature protection functions.

The two data communication interfaces of the electric/electronic control unit (ECU) respectively connect a first external communication line CL1 and a second external communication line CL2 to the ECU. The two data communication interfaces are responsible to maintain a redundant CAN communication between the brake actuator and the vehicle. Accordingly, communication lines CL1 and CL2 are the CAN lines. These lines are respectively connected to two separated so-called CAN RX/TX circuits CC1 and CC2. These two lines are needed to maintain a redundant communication. (Generally, it is known that in a Controller Area Network (CAN) a transmit line from a controller to a transceiver is called CAN TX, and that the receive line is called CAN RX).

The ECU further comprises a microcontroller unit (MCU) 20 which is responsible for the control of different sub-circuits of the ECU, such as an inverter 22, auxiliary power supplies APS1, APS2, a parking brake (PB) driver 26, the input switches IS1, IS2, a separator switch SS1, and the power switch PS1. The PB driver 26 is responsible for operating the parking brake of the vehicle. The ECU further comprises and/or is connected to one or more sensors 24 which, e.g., collect data that are relevant for the braking process, such as wheel speeds, etc.

First and second auxiliary power supplies APS1, APS2 are responsible to create a second voltage U2 and/or a third voltage U3 for the MCU 20, the sensors 24, the CAN RX/TX circuits CC1, CC2, and the PB driver circuits 26. Accordingly, Fig. 1 shows second energy transition lines 12 (solid black line in Fig. 1) for the second voltage level U2 and third energy transition lines 14 (dotted black line in Fig. 1) for the third voltage level U3. With this doubled architecture, the redundancy of the control circuits supply is ensured.

The ECU further comprises diodes D1, D2, D3, D4, D5, D6 and D7, as shown in Fig. 1. These diodes are responsible for a reverse polarity protection.

The ECU further comprises a separator switch SS1 which is responsible for the switching and separation of the U3 voltage lines 14 of the first and second auxiliary power supplies APS1, APS2. This separator switch SS1 is needed to maintain the voltage drop as low as possible, because the U3 voltage shall be stable, and the level boundaries are small.

The input switches IS1, IS2 are needed for a circuit separation if any failure happens. With these switches, the ECU can stop the failure propagation to the other subcircuits or to the vehicle. The input switches IS1, IS2 contain over-voltage and under-voltage protection functions and an over-current protection as well as an over-temperature protection.

The above-described components of the ECU are interconnected, as required, by communication/data lines 16 (dash black line in Fig. 1), as shown in Fig. 1.

In the case of a normal operation, the main supply line MSL and the secondary supply line SSL are available, and the input switches IS1, IS2 are active. Herein, the power demand of the brake actuator can be covered only with the power capability of the main supply line MSL or with the power capabilities of the main supply line MSL and the secondary supply line SSL together.

The auxiliary power supplies APS1, APS2 are always on. Thus, the MCU 20 will choose which auxiliary power supply APS1, APS2 will create the U2 and U3 voltages.

If one of the main and secondary supply lines MSL, SSL have a failure, the MCU 20 will disable that switch which belongs to or is affected by the failure. Thereby, the functionality of the brake actuator will decrease.

The diodes D1, D2, D3 and D4 shall ensure a reverse polarity protection and a ground fall protection if one of the main and secondary supply lines MSL, SSL have a failure.

If one of the auxiliary power supplies APS1, APS2 has a failure, the MCU 20 will disable the affected auxiliary power supply APS1 or APS2, and it will decouple the U3 voltage line 14 with the separator switch SS1 from the concerned auxiliary power supply APS1 or APS2. The diodes D5 and D6 shall protect the U2 voltage line 12 of the other, functional auxiliary power supply APS1 or APS2.

The attached drawing (Fig. 1) schematically shows in various types of drawing lines (solid lines, broken lines, dotted lines, chain dotted lines, etc.) the various kinds of electric supply lines or energy transition lines 10, 12, 14 and communication/data lines 16 that interconnect the components of the ECU and that are provided to accomplish the required functions of the ECU of the actuator of the brake system, as above described. Thus, additional features and functions of the ECU of the brake system, which are not explicitly discussed in this specification, but which are part of the present disclosure, become evident from the drawing.

### LIST OF REFERENCE SIGNS

- 10: first energy transition line (U1 voltage)
- 12: second energy transition line (U2 voltage)
- 14: third energy transition line (U3 voltage)
- 16: communication/data lines
- 20: microcontroller unit (MCU)
- 22: inverter
- 24: sensors
- 26: parking brake driver

- MSL: external main supply line
- SSL: external secondary supply line
- IS1: first input switch
- IS2: second input switch
- PS1: power switch
- SS1: separator switch
- APS1: first auxiliary power supply
- APS2: second auxiliary power supply
- D1-D7: diodes

- U1: first voltage
- U2: second voltage
- U3: third voltage
- P0: maximum required power of the brake actuator
- P1: first power capability
- P2: second power capability
- Pm: motor power demand

- CL1: first external communication line
- CL2: second external communication line
- CC1: CAN RX/TX circuit
- CC2: CAN RX/TX circuit

## Claims

1. Electronic control unit (ECU) for an actuator of an electro-mechanical brake for a commercial or transport vehicle, **characterized in that** it comprises two electrical supply interfaces,
- wherein the two electrical supply interfaces comprise a main supply interface which operates on a first voltage level U1, wherein the main supply interface is in electrical communication with a main supply line (MSL, 10), wherein the main supply line (MSL, 10) is configured to operate the brake actuator, and
- wherein the two electrical supply interfaces comprise a secondary supply interface which operates on the first voltage level U1, wherein the secondary supply interface is in electrical communication with a secondary supply line (SSL).

2. Electronic control unit according to claim 1, **characterized in that**
- the main supply interface and the main supply line (MSL) have a first power capability P1, and
- the secondary supply interface and the secondary supply line (SSL) have a second power capability P2,
- wherein the sum of the two power capabilities P1, P2 is equal to or higher than the maximum power demand P0 required by the brake actuator.

3. Electronic control unit according to claim 2, **characterized in that** it comprises a power switch (PS1) which connects the main supply line (MSL) and the secondary supply line (SSL) with each other to ensure a power demand Pm required by the electric motor which is driving the brake actuator, wherein the power demand Pm is split between the main supply line (MSL) and the secondary supply line (SSL).

4. Electronic control unit according to any one of the preceding claims, **characterized in that** it comprises two data communication interfaces, wherein the two data communication interfaces respectively are in data communication with two communication lines (CL1, CL2), wherein the two communication lines (CL1, CL2) are configured to operate a CAN communication between the brake actuator and the vehicle.

5. Electronic control unit according to claim 4, **characterized in that** the two communication lines (CL1, CL2) are respectively connected to two CAN RX/TX circuits (CC1, CC2).

6. Electronic control unit according to any one of the preceding claims, **characterized in that**
- the main supply line comprises a main supply line portion (MSL) external to the electronic control unit,
- the electronic control unit comprises a first energy transition line (10) which operates on the first voltage level U1, and
- the electronic control unit comprises a first input switch (IS1),
- wherein the first input switch (IS1) is configured to separate the external main supply line portion (MSL) from the electronic control unit and the first energy transition line (10).

7. Electronic control unit according to claim 6, **characterized in that**
- the secondary supply line comprises a secondary supply line portion (SSL) external to the electronic control unit, and
- the electronic control unit comprises a second input switch (IS2),
- wherein the second input switch (IS2) is configured to separate the external secondary supply line portion (SSL) from the electronic control unit and the first energy transition line (10).

8. Electronic control unit according to any one of the preceding claims, **characterized in that** it comprises one or more of the following: a microcontroller unit (MCU) (20), an inverter (22), one or more sensors (24), and a parking brake driver (26).

9. Electronic control unit according to claim 8, **characterized in that** it comprises a first auxiliary power supply (APS1) and a second auxiliary power supply (APS2), wherein the first and second auxiliary power supplies (APS1, APS2) are configured to generate a second voltage U2 and/or a third voltage U3 for the MCU (20) and/or the sensors (24) and/or the CAN RX/TX circuits (CC1, CC2) and/or the parking brake driver (26).

10. Electronic control unit according to claim 9, **characterized in that** it comprises a second energy transition line (12) for the second voltage level U2 and a third energy transition line (14) for the third voltage level U3.

11. Electronic control unit according to claim 10, **characterized in that** it comprises a separator switch (SS1) which is configured to switch and separate the U3 voltage lines (14) of the first and second auxiliary power supplies (APS1, APS2).

12. Electronic control unit according to any one of claims 9 to 11, **characterized in that**, if the first and second auxiliary power supplies (APS1, APS2) are available, the MCU (20) is configured to choose which one of the first and second auxiliary power supplies (APS1, APS2) will generate the U2 and U3 voltages.

13. Electronic control unit according to any one of claims 11 to 12, **characterized in that**, if one of the first and second auxiliary power supplies (APS1, APS2) has a failure, the MCU (20) is configured to disable the affected auxiliary power supply (APS1 or APS2) and to decouple the U3 voltage line (14) with the separator switch (SS1) from the affected auxiliary power supply (APS1 or APS2).

14. Electro-mechanical brake for a commercial or transport vehicle, **characterized in that** it comprises an electronic control unit (ECU) according to any one of the preceding claims.
